# EUROPÄISCHE PATENTSCHRIFT

(11) **EP 3 457 064 B1**
(45) Veröffentlichungstag und Bekanntmachung des Hinweises auf die Patenterteilung: **15.05.2024**
(21) Anmeldenummer: 17191620.8
(22) Anmeldetag: 18.09.2017
(51) Int. Cl.: F27B 17/02, A61C 13/20, F27D 21/00

(54) **DENTALOFEN SOWIE VERFAHREN ZUM BETRIEB EINES DENTALOFENS**
DENTAL OVEN AND METHOD FOR OPERATING SAME
FOUR DENTAIRE AINSI QUE PROCÉDÉ DE FONCTIONNEMENT D'UN FOUR DENTAIRE

(43) Veröffentlichungstag der Anmeldung: 20.03.2019
(73) Patentinhaber: Ivoclar Vivadent AG, 9494 Schaan (LI)
(72) Erfinder: JUSSEL, Rudolf, 6800 Feldkirch (AT); SCHLEGEL, Manuel, 8887 Mels (CH)
(74) Vertreter: Baldus, Oliver

(56) Entgegenhaltungen:
- DE-B- 1 160 777
- DE-C1- 4 303 458
- DE-C1- 10 208 801

## Beschreibung

Die Erfindung betrifft einen Dentalofen gemäß dem Oberbegriff von Anspruch 1 sowie ein Verfahren zum Betrieb eines Dentalofens, gemäß dem Oberbegriff von Anspruch 13.

Dentalöfen, bei denen über eine Unterdruckquelle der Brennraum unter Unterdruck gesetzt werden kann, sind seit langem bekannt.

Ein Beispiel hierfür ist der aus der DE 1 160 777 A1 bekannte Dentalofen. Bei dieser Lösung lässt sich der Brennraum unter Unterdruck setzen, aber auch über die gleiche Vakuumpumpe eine Hubeinrichtung betätigen.

Derartige Lösungen sind in der Folge durchaus weiterverfolgt worden, wie es beispielweise aus der DE 102 08 801 C1 oder der DE 11 60 777B1 ersichtlich ist.

In der DE 43 03 458 C1 wird ebenfalls ein Dentalofen beschreiben.

Um den unterschiedlichen Anforderungen hinsichtlich der Steuerung des Unterdrucks gerecht zu werden, ist es auch bereits vorgeschlagen worden, mit regelbaren Unterdruckpumpen zu arbeiten. Diese sind jedoch vergleichsweise teuer, und bedienen auch eine entsprechend aufwendige Steuerung, beispielsweise mittels einer PID-Regelung. Demgegenüber liegt der Erfindung die Aufgabe zugrunde, einen Dentalofen gemäß dem Oberbegriff von Anspruch 1 sowie ein entsprechendes Verfahren zum Betrieb des Dentalofens gemäß dem Oberbegriff von Anspruch 13 zu schaffen, die preisgünstig eine optimierte Anpassung der Drucksituationen und Unterdrucksituationen an die Erfordernisse während des Wärmebehandlungsprozesses zu ermöglichen.

Diese Aussage wird erfindungsgemäß durch die Ansprüche 1 bzw. 13 gelöst. Vorteilhafte Weiterbildungen ergeben sich aus den Unteransprüchen.

Erfindungsgemäß ist es besonders günstig, dass mit einer Einfach-Unterdruckpumpe eine an die Erfordernisse des Wärmebehandlungsprozesses optimal angepasste Be- und Entlüftungsmaßnahmen getroffen werden können. Es ist an dem Auslassanschluss des Dentalofens ein T-förmiges oder Y-förmiges Anschlussstück vorgesehen. Ein Eingang des Anschlussstückes ist mit dem Auslassanschluss des Dentalofens verbunden. Der Ausgang des Anschlussstücks ist mit der Unterdruckquelle, also beispielsweise einer entsprechenden Saugpumpe, verbunden. Es versteht sich, dass anstelle der Saugpumpe auch ein Unterdruck-Speicherbehälter eingesetzt werden kann.

Der andere Eingangsanschluss des Anschlussstücks ist mit der Umgebungsluft verbunden, und zwar bevorzugt in gesteuerter Weise, also mit einem Strömungswiderstand versehen. Der Strömungswiderstand kann als Ventil ausgebildet sein, dass in Abhängigkeit von den Erfordernissen des Wärmebehandlungsprozess geöffnet und geschlossen wird.

Der Dentalofen weist ferner einen Einlassanschluss für die Brennkammer auf, der bevorzugt seinem Auslassanschluss gegenüberliegend angeordnet ist. Auch der Eingangsanschluss ist mit einer Leitung verbunden, die als zweite Luftleitung bezeichnet wird. Diese weist einen Strömungswiderstand wie beispielsweise einen Filter und/oder ein Ventil auf.

Die bevorzugte Vorgehensweise während des Wärmebehandlungsprozesses umfasst als ersten Schritt ein Evakuieren des Brennraums zur Vorbereitung des Wärmebehandlungsprozesses . Hierzu sind die Ventile in der ersten Luftleitung und der zweiten Luftleitung geschlossen, und die Saugpumpe arbeitet gegen den Unterdruck, bis ein vorgegebener Unterdruck oder das Endvakuum erreicht ist.

Der Wärmebehandlungsprozesswird mit Aufheizen des Brennraums eingeleitet. Ab einem vorgegebenen Temperaturniveau wird nun das Ventil am Eingangsanschluss der Brennkammer geöffnet, während die Saugpumpe arbeitet. Das Öffnen kann kurzzeitig erfolgen, beispielsweise für eine Sekunde. Die in den Brennraum eingeführte Frischluft führt dazu, dass der Dentalrestauration Sauerstoff zugeleitet wird, ohne dass es zu einer massiven Abkühlung kommen würde.

Für den Abkühlprozess kann ebenfalls mit intermittierendem Öffnen des Eingangsanschluss-Ventils oder mit vollständigem Öffnen gearbeitet werden. Hierdurch kann die Saugpumpe den maximalen Volumenstrom durch den Brennraum ziehen.

Die austretende Luft kann gekühlt werden, beispielsweise über einen Wärmetauscher.

Je nach Bedarf besteht auch die Möglichkeit, den Brennraum über das Öffnen beider Ventile sehr rasch mit Frischluft zu fluten. Dies kann zur Prozessbeschleunigung und/oder zu Qualitätsverbesserungen des Dentalrestaurationsteils führen.

Erfindungsgemäß ist es besonders günstig, dass die Abkühlzeit bei Bedarf stark verkürzt werden kann, indem durch das Frischluftspülen des Brennraums beim Abkühlprozess dem Brennraum Wärmeenergie entzogen werden kann. Bei gegenüberliegender Anordnung von Eingangsanschluss und Ausgangsanschluss wird die Wärme genau dort entfernt, wo es für die Abkühlung relevant ist, nämlich im Brennraum.

Dies stellt einen erheblichen Fortschritt gegenüber einer freien Abkühlung dar, bei welcher hauptsächlich die Umgebung des Brennraums beeinflusst wird.

Erfindungsgemäß kann ein Wärmetauscher vorgesehen sein, der Wärme von der Saugleitung zwischen dem Ausgang des Anschlussstücks und der Unterdruckquelle zur zweiten Luftleitung am Eingangsanschluss der Brennkammer überträgt.

Eine derartige Wärmerückgewinnung ist insbesondere während des Aufheizens oder in einer in einem Zeitraum im Wärmebehandlungsprozess günstig, bei dem die Temperatur im Wesentlichen gehalten werden soll. Der Brennraum kann dann mit warmer Frischluft belüftet werden, ohne dass es zu einer schlagartigen Abkühlung und damit einhergehenden Risiken beim Wärmebehandlungsprozesskommt.

Hierdurch wird zugleich auch die Saugleitung ab dem Wärmetauscher gekühlt, sodass der Einbau einer separaten Kühlfalle zum Schonen der Pumpe nicht erforderlich ist. Hierbei ist auch zu berücksichtigen, dass beim Wärmebehandlungsprozessggf. aggressive Dämpfe auftreten, gegen die die Saugleitung insbesondere bei heißen Temperaturen ansonsten geschützt werden müsste.

Erfindungsgemäß ist es besonders günstig, wenn der Auslassanschluss des Ofens oben und der Einlassanschluss unten ist. Bei Bedarf lässt sich hierdurch die Kühlung des Brennraums optimieren.

In vorteilhafter Ausgestaltung ist es vorgesehen, das Anschlussstück aus gut wärmeleitenden Metall mit einer vergleichsweise großen Oberfläche auszubilden. Hierdurch ist es möglich, bereits an dieser Stelle Wärme abzuführen, nachdem das Anschlussstück von Umgebungsluft umgeben ist. Das Anschlussstück ist bevorzugt so ausgelegt, dass Gase mit Temperaturen bis zu 1200, 1400 oder gar 1600 Grad Celsius bei vorgegebenener Fördermenge von mehreren Litern / Minute das metallische Anschlussstück nicht schädigen.

Durch die Kühlung durch den Wärmetausch am Anschlussstück wird die austretende Luft deutlich gekühlt, sodass auslassseitig beispielsweise eine Maximaltemperatur von lediglich 500 Grad vorliegt.

Wenn diese Temperatur für die verwendeten Materialien der Saugleitung zu hoch ist, besteht auch die Möglichkeit, das Ventil in der ersten Luftleitung beim Abpumpen heißer Luft zusätzlich zu öffnen, sodass im Anschlussstück heiße und kalte Luft gemischt wird und sich die Temperatur beispielsweise auf 200 Grad absenken lässt.

Es versteht sich, dass die Ventile in der ersten Luftleitung und der zweiten Luftleitung als Ein-/Aus-Ventile ausgebildet sein können. Diese sind bevorzugt im stromlosen Zustand geschlossen. Es ist aber bei Bedarf auch möglich, das Ventil in der ersten Luftleitung und/oder das Ventil in der zweiten Luftleitung als regelbares Ventil auszubilden.

Wenn das Ventil in der ersten Luftleitung, das auch als Bypassventil bezeichnet werden kann, teilgeöffnet wird, entsteht eine Strömungsbegrenzung in der ersten Luftleitung. Hierdurch lässt sich der Volumenstrom durch den Brennraum bei Bedarf auf einen beliebigen Wert einstellen, sodass ein Teil der durch die Saugleitung abgeführten Luft durch die erste Luftleitung und ein anderer Teil durch die zweite Luftleitung und den Brennraum zugeführt wird.

Hierdurch lässt sich auch allenfalls durch die Förderung entstehende Unterdruck in der Brennkammer trotz Verwendung einer Einfach-Saugpumpe reduzieren, wenn dies erwünscht ist.

In weiterer vorteilhafter Ausgestaltung ist vorgesehen, die erste Luftleitung so zu führen, dass die dort zugeführte Frischluft andere Komponenten kühlt. Hierzu gehört zum Beispiel die Leistungselektronik des Dentalofens, die typischerweise im Ofenunterteil untergebracht ist. Es ist auch möglich, die Luft durch die erste Luftleitung außerhalb der Wärmedämmung der Ofenhaube durchströmen zu lassen, um die meist metallische Gehäusewand der Ofenhaube vorsorglich weiter zu kühlen.

Wenn die Saugpumpe unmittelbar benachbart dem Ofen angeordnet ist und dementsprechend eine kurze Saugleitung vorliegt, kann es vorteilhaft sein, eine Kühlfalle in die Saugleitung kurz vor der Saugpumpe einzusetzen.

Bevorzugt ist das Anschlussstück unmittelbar an dem Dentalofen angebracht, also auf beispielsweise auf die Ofenhaube montiert. Im Einzelfall kann es sinnvoll sein das Anschlussstück etwas entfernt von dem Dentalofen zu montieren, wobei es sich versteht, dass die dann kurze Hochtemperaturleitung zwischen Anschlussstück und Dentalofen dann besonders temperaturfest sein muss.

Fernen ist es auch möglich, mehr als einen Anschluss für die Absaugung zu verwenden und beispielsweise ein Anschlussstück rechts oben an der Ofenhaube und ein Anschlussstück links oben an der Ofenhaube anzuordnen, oder einander gegenüberliegend rechts oben und links unten oder andersherum. Der Eingangsanschluss ist dann jedoch je von den Anschlussstücken deutlich benachbart; der Eingangsanschluss und die Anschlussstücke können dann insofern etwa im Dreieck angeordnet sein, sodass die durch den Eingangsanschluss zutretende Frischluft zu den Anschlussstücken hin jeweils den Brennraum durchströmt.

Die Saugpumpe lässt sich bei Bedarf auch getaktet betreiben, sodass in der Summe ein reduzierter Volumenstrom bereitgestellt wird. Durch eine vergleichsweise lange Saugleitung besteht ein Unterdruckpuffer, der die Schaltwirkungen der Taktung reduziert.

Da typischerweise preisgünstige Saugpumpen recht laut sind, kommt es auch in Betracht, die Saugpumpe außerhalb des Raums, in dem der Dentalofen angeordnet ist, zu betreiben. Die Saugleitung kann dann 5, 10 oder sogar 20 Meter lang sein, sodass aufgrund einer derart langen Saugleitung auch eine Kühlfalle entbehrlich ist.

Erfindungsgemäß ist es jedenfalls möglich, je nach Vorgaben des Wärmebehandlungsprozess den maximalen Unterdruck oder einen geringeren Unterdruck während unterschiedlicher Temperaturniveaus bereitzustellen. Durch den Wärmetauscher lässt sich der Wärmeentzug hierbei minimieren. Alternativ lässt sich auch ein rasches Abkühlen bewerkstelligen, wobei es auch möglich ist, ein Bypass über den Wärmetauscher eingangsseitig zu legen, sodass seine Wirkung bei Bedarf abschaltbar ist.

Es versteht sich, dass die Strömungsquerschnitte der Leitungen in strömungstechnischer Hinsicht an die Erfordernisse angepasst werden können. Wenn beispielsweise mit einer Saugleitung und einer ersten und einer zweiten Luftleitung gearbeitet wird, ist bevorzugt der Strömungsquerschnitt der Saugleitung doppelt so groß wie der der Luftleitungen. Dies gilt sinngemäß natürlich auch für das Anschlussstück, das in der einfachsten Version kurzerhand zwei Bohrungen als Eingänge und eine Bohrung als Ausgang aufweist, die einander treffen. Das Anschlussstück kann insofern Y-förmig, T-förmig oder sternförmig ausgebildet sein. Es kann bei Bedarf auch mit einem Berührungsschutz versehen sein, beispielsweise einer Abdeckung, die mehrere Zentimeter Luft belässt.

Das Anschlussstück kann auch mit einem vergleichsweise langen Anschlussstutzen für die erste Luftleitung versehen sein. Dieser kann auch Kühlrippen ausbilden, sodass das insgesamt metallische Anschlussstück durch die Zuleitung der kühlen Luft über die erste Luftleitung gekühlt wird.

Der Wärmehandlungsprozess kann ein Sinterprozess oder ein Brennprozess sein.

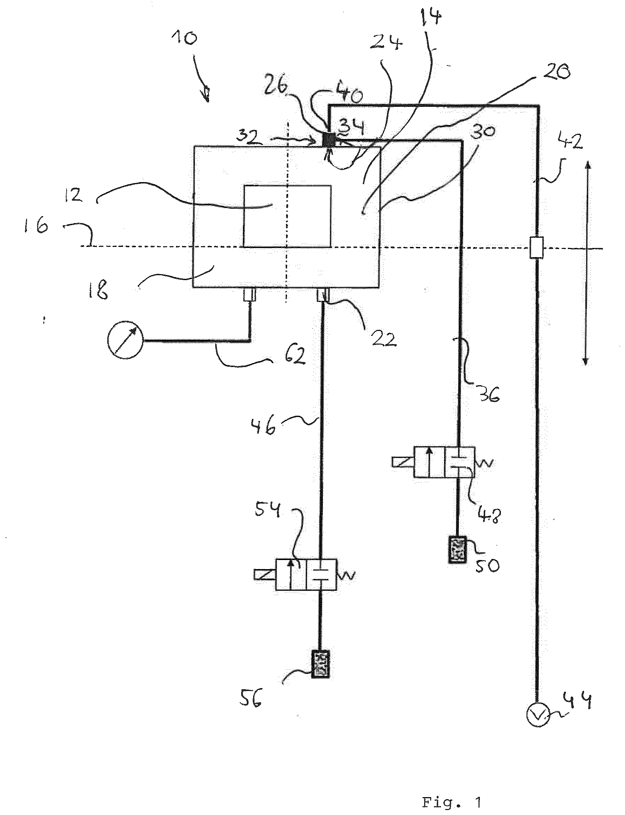

Weitere Vorteile, Einzelheiten und Merkmale ergeben sich aus der nachfolgenden Beschreibung eines Ausführungsbeispiels der Erfindung anhand der Zeichnung.

Es zeigt:
Die einzige Figur der Zeichnung eine schematische Anordnung von verschiedenen Leitungen und Schaltelementen eines erfindungsgemäßen Dentalofen.

Der in der Figur schematisch dargestellte Dentalofen 10 weist eine Brennkammer oder einen Brennraum 12 auf, der in einem Ofenkopf 14 ausgebildet ist. Der Ofenkopf 14 schließt an einer Trennebene 16 gegenüber einem Ofenunterteil 18.

in an sich bekannter Weise weist der Ofenkopf 14 Heizelemente auf, die sich ringförmig um den im Wesentlichen zyllindrischen Brennraum 12 erstrecken. Sowohl der Ofenkopf 14 als auch das Ofenunterteil 18 sind mit Wärmedämmmaterial 20 versehen, das beispielsweise als Schamott ausgebildet sein kann und offenporig ist, sodass es durchströmbar ist.

Erfindungsgemäß ist der Dentalofen 10 mit einem Einlassanschluss 22 für die Zufuhr von Umgebungsluft, die auch als Frischluft bezeichnet werden kann, sowie mit einem Auslassanschluss 24 versehen, an dem ein Anschlussstück 26 angebracht ist.

Das Anschlussstück 26 ist direkt an der Gehäusewand 30 des Ofenkopfes 14 angeflanscht. Es weist einen Eingang 32 auf, der in Strömungsverbindung mit dem offenporigen Wärmedämmmaterial 20 steht. Fernen weist es einen zweiten Eingang 34 auf, der über eine erste Luftleitung 36 mit Umgebungsluft in Verbindung steht.

Ferner weist das Anschlussstück 26 einen Ausgang 40 auf, der mit einer Saugleitung 42 in Strömungsverbindung steht.

In dem dargestellten Ausführungsbeispiel erstrecken sich sowohl die erste Luftleitung 36 als auch die Saugleitüng 42 zunächst im Bereich des Ofenkopfes 14 und von hier ausgehend nach unten, also in den Bereich des Ofenunterteils 18, und ggf. seitlich weg von diesem.

Die Saugleitung 42 erstreckt sich zu einer Unterdruckquelle 44, die bevorzugt als Saugpumpe 44 ausgebildet ist und deren Abluft bevorzugt außerhalb des Raums geführt wird, in dem der Dentalofen steht.

Der Eingangsanschluss 22 ist mit einer zweiten Luftleitung 46 in Verbindung.

Die erste Luftleitung 36 ist mit einem Bypassventil 48 versehen, über welches sie mit einem Filter und/oder Schalldämpfer 50 mit der Umgebungsluft in Verbindung steht.

In ähnlicher Weise ist die zweite Luftleitung 46 mit einem zweiten Ventil 54 versehen, über welches sie mit einem zweiten Filter und/oder Schalldämpfer 56 mit der Umgebungsluft in Verbindung steht.

In dem dargestellten Ausführungsbeispiel ist ein Unterdrucksensor 60 vorgesehen, der über eine Stichleitung 62 mit dem Inneren des Dentalofens 10 in Verbindung steht. Hierdurch lässt sich der bestehende Unterdruck im Brennraum 12 erfassen und für die Steuerung der beiden Ventile 48 und 54 und der Saugpumpe 44 einsetzen.

Für die Durchführung eines Wärmebehandlungsprozesswird nun in dem hier dargestellten Ausführungsbeispiel zunächst das Bypassventil 48 und das zweite Ventil 54 geschlossen und die Saugpumpe 44 eingeschaltet.

Alternativ kann auch zunächst für eine kurze Zeit das zweite Ventil 54 in der geöffneten Stellung gehalten werden, um etwaige Restgase des letzten Wärmebehandlungsprozesses sicher zu entfernen.

Hieran anschließend wird der Wärmebehandlungsprozessbegonnen, in dem die nicht dargestellte Heizung für den Brennraum 12 eingeschaltet wird. Dies erfolgt unter Unterdruck, und der Unterdruck wird aufrechterhalten, nachdem die Saugpumpe 44 während dieser Zeit betrieben wird, sodass auch etwaige geringe Undichtigkeiten den Unterdruck nicht vermindern.

Wenn die Temperatur für den weiteren Abschnitt des Wärmebehandlungsprozessesabgesenkt werden soll, wird die Saugpumpe 44 erneut eingeschaltet und das Ventil 54 geöffnet. Hierdurch wird der Brennraum 12 mit Frischluft gespült und es ist bei Bedarf möglich, eine rasche Abkühlung bereit zu stellen. Die Saugpumpe 44 kann hierbei auch getaktet eingeschaltet werden, wenn die Abkühlung nicht so schnell erfolgen soll.

Dieses Verfahren ist jedenfalls günstiger als das Öffnen des Brennraums an der Trennlinie 16, nachdem ansonsten schlagartig stets Kühlluft zugeführt wird.

Bei einem modifizierten Verfahren wird auch das Bypassventil 44 während des Betriebs der Saugpumpe 44 mindestens teilweise geöffnet. Hierdurch lässt sich die Höhe des Unterdrucks, der von dem Unterdrucksensor 60 gemessen wird, steuern.

In einer weiteren modifizierten Ausgestaltung ist es vorgesehen, die Saugleitung 44 und die zweite Luftleitung 46 nah aneinander heranzuführen und zwischen diesen einen Wärmetauscher bereitzustellen. Hierdurch lässt sich die aus dem Ausgang 44 austretende heiße Ofenluft thermisch wiedergewinnen und der Luftleitung 46 zuführen, was insbesondere für das Aufheizen günstig ist.

Der Wärmetauscher kann je auch bei Bedarf mit einer zusätzlichen Bypassleitung eingangsseitig und/oder ausgangsseitig versehen sein, die wiederum ein Ventil aufweisen kann. Durch das Ventil wird die betreffende Seite des Wärmetauschers gleichsam kurzgeschlossen, sodass die Wärmetauscherwirkung umgangen wird, wie es insbesondere für das Abkühlen und die Zufuhr kalter Frischluft günstig ist.

Der erfindungsgemäße Dentalofen kann auch als ein Entbinderungsofen ausgebildet sein. Die dort erzeugte Abluft lässt sich erfindungsgemäß besonders gut mit der erfindungsgemäßen Saugpumpe 44 und den zugehörigen Ventilen abführen.

## Patentansprüche

1. Dentalofen, mit einer geschlossenen oder verschließbaren Brennkammer (12), die von einer Wärmedämmung (20) umgeben ist und welche mindestens einen Einlassanschluss (22) und mindestens einen Auslassanschluss (24) aufweist, über welche beide ein Gas, insbesondere Luft, durch die Brennkammer (12) hindurch undloder aus der Brennkammer (12) hinaus leitbar ist, wobei eine Unterdruckquelle (44) vorgesehen ist, die direkt oder indirekt mit dem Auslassanschluss (24) in Verbindung steht und über welche der Auslassanschluss (24) unter Unterdruck setzbar ist, **dadurch gekennzeichnet, dass** an dem Auslassanschluss (24) ein insbesondere T-förmiges oder Y-förmiges Anschlussstück (26) angebracht ist, dass das Anschlußstück (26) zwei Eingänge (32, 24) und einen Ausgang (40) aufweist, wobei der Ausgang (40) mit der Unterdruckquelle (44) in Verbindung steht und ein erster Eingang mit der Brennkammer (12) in Verbindung steht, insbesondere an deren Ausgangsanschluß (24) angeflanscht ist, und ein zweiter Eingang (34) mit Umgebungsluft in Verbindung steht und zwar in gesteuerter Weise, insbesondere mit einem Strömungswiderstand.

2. Dentalofen nach Anspruch 1, **dadurch gekennzeichnet, dass** der zweite Eingang (34) des Anschlussstücks (26) an eine erste Luftleitung (36) mit einem oder mehreren Elementen mit einem Strömungswiderstand angeschlossen ist, insbesondere mit einem Ventil (48).

3. Dentalofen nach einem der vorhergehenden Ansprüche, **dadurch gekennzeichnet, dass** der Einlassanschluss (22) und der Auslassanschluss (24), bezogen auf die Brennkammer (12) des Dentalofens (10), einander gegenüberliegend angeordnet sind, dergestalt, dass sich mindestens ein Teil der Brennkammer (12) zwischen ihnen erstreckt.

4. Dentalofen nach einem der vorhergehenden Ansprüche, **dadurch gekennzeichnet, dass** der Einlassanschluss (22) an eine zweite Luftleitung (46) angeschlossen ist, die ein Ventil (54) und/oder ein Filter (56) aufweist.

5. Dentalofen nach einem der vorhergehenden Ansprüche, **dadurch gekennzeichnet, dass** sich zwischen dem Anschlussstück (26) und der Unterdruckquelle (44) eine Saugleitung (42) erstreckt, die einen Wärmetausch zwischen der Umgebungsluft und der die Saugleitung (42) durchströmenden Saugluft aufgrund des für die Saugleitung (42) verwendeten Materials ermöglicht.

6. Dentalofen nach Anspruch 5, **dadurch gekennzeichnet, dass** die Saugleitung (42) einen Wärmetauscher aufweist, der auch an die Luftleitung (36) des Eingangs (34) des Dentalofens (10) angeschlossen ist.

7. Dentalofen nach Anspruch 6, **dadurch gekennzeichnet, dass** der Wärmetauscher mit einer Bypassleitung versehen ist, die mit einem Umschaltventil zwischen Bypass und Wärmetauscher versehen ist.

8. Dentalofen nach einem der vorhergehenden Ansprüche, **dadurch gekennzeichnet, dass** das Anschlussstück (26) aus wärmeleitfähigem Material wie Metall besteht und dass der zweite Eingang (34) mit einem Anschlussstutzen von mehreren Zentimetern Länge, insbesondere 10 cm Länge, versehen ist.

9. Dentalofen nach einem der vorhergehenden Ansprüche, **dadurch gekennzeichnet, dass** der Anschlussstutzen oder das Anschlussstück eine vergrößerte Oberfläche, insbesondere Kühlrippen, aufweist.

10. Dentalofen nach einem der vorhergehenden Ansprüche, **dadurch gekennzeichnet, dass** die Frischluftleitung (36) , die dem zweiten Eingang (34) des Anschlussstücks (26) Frischluft zuleitet, an externe Wärmequellen des Dentalofens (10) wie beispielsweise die Leistungselektronik angeschlossen ist und diese kühlt.

11. Dentalofen nach einem der vorhergehenden Ansprüche, **dadurch gekennzeichnet, dass** mindestens zwei Einlassanschlüsse (22) für die Versorgung der Brennkammer (12) mit Frischluft vorgesehen sind, die voneinander beabstandet angeordnet sind und dem Auslassanschluss (24) gegenüber liegen.

12. Dentalofen nach einem der vorhergehenden Ansprüche, **dadurch gekennzeichnet, dass** mindestens zwei Auslassanschlüsse (24) vorgesehen sind, die dem oder den Einlasssanschlüssen (22) gegenüberliegend angeordnet sind, wobei beide Auslassanschlüsse (24) an dem Anschlussstück (26) zusammengeführt sind.

13. Verfahren zum Betrieb eines Dentalofens, insbesondere eines Dentalofens gemäß einem der vorhergehenden Ansprüche, unter Verwendung eines Wärmebehandlungsprozesses für die Dentalrestauration(en), **dadurch gekennzeichnet, dass** an der Brennkammer des Dentalofens (10) ein Auslassanschluss (24) angebracht ist, über welchen ein Gas aus der Brennkammer (12) herausleitbar ist, insbesondere durch Unterdruck, dass die Brennkammer (12) des Dentalofens (10) vor Beginn des Wärmebehandlungsprozesses oder beim Beginn des Wärmebehandlungsprozesses über den Auslassanschluss (24) evakuiert wird, insbesondere mit einem maximalen Volumenstrom, und dass das mindestens ein Teil des Wärmebehandlungsprozesses in evakuiertem Zustand durchgeführt wird und bei einer vorbestimmten Temperatur während des Abkühlens die Brennkammer (12) zunehmend mit Umgebungsluft versorgt wird oder zu einem anderen Zeitpunkt des Wärmebehandlungsprozesses kontinuierlich Umgebungsluft unter Einschaltung der Unterdruckquelle (44) durch den Brennraum (12) gesaugt wird, insbesondere über einen Einlassanschluss (22).

## Claims

1. A dental furnace having a closed or closable firing chamber (12), which is surrounded by a thermal insulation (20) and which has at least one inlet port (22) and at least one outlet port (24), through both of which a gas, in particular air, is passable through the firing chamber (12) and/or dischargeable from the firing chamber (12), wherein a vacuum source (44) is provided, which is in direct or indirect communication with the outlet port (24) and by which the outlet port (24) may be depressurized, **characterized in that** at the outlet port (24) an in particular T-shaped or Y-shaped connector (26) is attached, **in that** the connector (26) comprises two inlets (32, 24) and one outlet (40), wherein the outlet (40) is in communication with the vacuum source (44) and a first inlet is in communication with the firing chamber (12), particularly is flange-mounted to the outlet port (24) thereof, and a second inlet (34) is in communication with ambient air, namely in a controlled manner, in particular with a flow resistance.

2. The dental furnace according to claim 1, **characterized in that** the second inlet (34) of the connector (26) is connected to a first air line (36) via one or more members having a flow resistance, especially a valve (48).

3. The dental furnace according to one of the preceding claims, **characterized in that** the inlet port (22) and the outlet port (24), in terms of the firing chamber (12) of the dental furnace (10), are arranged opposite each other such that at least part of the firing chamber (12) extends therebetween.

4. The dental furnace according to one of the preceding claims, **characterized in that** the inlet port (22) is connected to a second air line (46) which comprises a valve (54) and/or a filter (56).

5. The dental furnace according to one of the preceding claims, **characterized in that** a suction line (42) extends between the connector (26) and the vacuum source (44), enabling heat exchange between the ambient air and the suction air passing through the suction line (42) due to the material used for the suction line (42).

6. The dental furnace according to claim 5, **characterized in that** the suction line (42) comprises a heat exchanger which is also connected to the air line (36) of the inlet (34) of the dental furnace (10).

7. The dental furnace according to claim 6, **characterized in that** the heat exchanger is provided with a bypass line which is provided with a switching valve between the bypass and heat exchanger.

8. The dental furnace according to one of the preceding claims, **characterized in that** the connector (26) consists of thermally conductive material, such as metal, and that the second inlet (34) is provided with a connecting piece of several centimeters in length, in particular 10 cm in length.

9. The dental furnace according to one of the preceding claims, **characterized in that** the connecting piece or the connector comprises an enlarged surface, in particular cooling ribs.

10. The dental furnace according to one of the preceding claims, **characterized in that** the fresh air line (36) supplying fresh air to the second inlet (34) of the connector (26), is connected to external heat sources of the dental furnace (10), such as the power electronics, and cools the same.

11. The dental furnace according to one of the preceding claims, **characterized in that** at least two inlet ports (22) for supplying fresh air to the firing chamber (12) are provided, which are arranged spaced apart from each other and are located opposite the outlet port (24).

12. The dental furnace according to one of the preceding claims, **characterized in that** at least two outlet ports (24) are provided, which are arranged opposite the inlet port(s) (22), wherein both outlet ports (24) are joined at the connector (26).

13. A method for operating a dental furnace, in particular a dental furnace according to one of the preceding claims, using a heat treatment process for the dental restoration(s), **characterized in that** an outlet port (24) is attached to the firing chamber of the dental furnace (10), through which a gas is dischargeable from the firing chamber (12), in particular by way of negative pressure, **in that** the firing chamber (12) of the dental furnace (10) is evacuated via the outlet port (24) prior to starting the heat treatment process or when starting the heat treatment process, in particular by a maximum volume flow, and **in that** at least part of the heat treatment process is performed in the evacuated state and the firing chamber (12) is increasingly supplied with ambient air at a predetermined temperature during the cooling, or at another point in time of the heat treatment process ambient air is continuously sucked through the firing chamber (12) by turning on the vacuum source (44), in particular via an inlet port (22).

## Revendications

1. Four dentaire, avec une chambre de combustion (12) fermée ou pouvant être fermée, qui est entourée d'une isolation thermique (20) et qui présente au moins un raccord d'entrée (22) et au moins un raccord de sortie (24), par lesquels un gaz, en particulier de l'air, peut être conduit à travers la chambre de combustion (12) et/ou hors de la chambre de combustion (12), où une source de dépression (44) est prévue, qui est en liaison directe ou indirecte avec le raccord de sortie (24) et par laquelle le raccord de sortie (24) peut être mis en dépression, **caractérisé en ce qu'**une pièce de raccordement (26), en particulier en forme de T ou de Y, est montée sur le raccord de sortie (24), **en ce que** la pièce de raccordement (26) présente deux entrées (32, 24) et une sortie (40), où la sortie (40) est reliée à la source de dépression (44) et une première entrée est reliée à la chambre de combustion (12), en particulier bridée sur son raccord de sortie (24), et une deuxième entrée (34) est reliée à l'air ambiant de manière contrôlée, en particulier avec une résistance à l'écoulement.

2. Four dentaire selon la revendication 1, **caractérisé en ce que** la deuxième entrée (34) de la pièce de raccordement (26) est raccordée à une première conduite d'air (36) comportant un ou plusieurs éléments présentant une résistance à l'écoulement, en particulier une vanne (48) .

3. Four dentaire selon l'une des revendications précédentes, **caractérisé en ce que** le raccord d'entrée (22) et le raccord de sortie (24) sont disposés l'un en face de l'autre par rapport à la chambre de combustion (12) du four dentaire (10), de telle manière qu'au moins une partie de la chambre de combustion (12) s'étend entre eux.

4. Four dentaire selon l'une des revendications précédentes, **caractérisé en ce que** le raccord d'entrée (22) est relié à un deuxième conduit d'air (46) comprenant une vanne (54) et/ou un filtre (56).

5. Four dentaire selon l'une des revendications précédentes, **caractérisé en ce qu'**une conduite d'aspiration (42) s'étend entre la pièce de raccordement (26) et la source de dépression (44), ce qui permet un échange de chaleur entre l'air ambiant et l'air d'aspiration circulant à travers la conduite d'aspiration (42) en raison du matériau utilisé pour la conduite d'aspiration (42).

6. Four dentaire selon la revendication 5, **caractérisé en ce que** la conduite d'aspiration (42) présente un échangeur de chaleur qui est également relié à la conduite d'air (36) de l'entrée (34) du four dentaire (10).

7. Four dentaire selon la revendication 6, **caractérisé en ce que** l'échangeur de chaleur est muni d'une conduite de dérivation qui est munie d'une vanne d'inversion entre la dérivation et l'échangeur de chaleur.

8. Four dentaire selon l'une des revendications précédentes, **caractérisé en ce que** le connecteur (26) est constitué d'un matériau thermoconducteur tel que le métal et que la deuxième entrée (34) est munie d'une buse de raccordement de plusieurs centimètres de longueur, en particulier de 10 cm de longueur.

9. Four dentaire selon l'une des revendications précédentes, **caractérisé en ce que** la buse de raccordement ou la pièce de raccordement a une surface élargie, en particulier les ailettes de refroidissement.

10. Four dentaire selon l'une des revendications précédentes, **caractérisé en ce que** le conduit d'air frais (36) qui fournit de l'air frais à la deuxième entrée (34) du connecteur (26) est connecté à des sources de chaleur externes du four dentaire (10), comme par exemple l'électronique de puissance, et les refroidit.

11. Four dentaire selon l'une des revendications précédentes, **caractérisé en ce qu'**au moins deux raccords d'entrée (22) sont prévus pour l'alimentation en air frais de la chambre de combustion (12), qui sont disposés espacés l'un de l'autre et se trouvent en face du raccord de sortie (24) .

12. Four dentaire selon l'une des revendications précédentes, **caractérisé en ce qu'**au moins deux raccords de sortie (24) sont prévus, qui sont disposés en face du ou des orifices d'entrée (22), où les deux raccords de sortie (24) convergent sur la pièce de raccordement (26).

13. Procédé de fonctionnement d'un four dentaire, en particulier d'un four dentaire selon l'une des revendications précédentes, en utilisant un procédé de traitement thermique pour la ou les restaurations dentaires, **caractérisé en ce qu'**un raccord de sortie (24) est fixé à la chambre de combustion du four dentaire (10), au-dessus duquel un gaz peut être évacué de la chambre de combustion (12), en particulier au moyen d'une pression négative, **en ce que** la chambre de combustion (12) du four dentaire (10) est évacuée par le raccord de sortie (24) avant le début du procédé de traitement thermique ou au début du procédé de traitement thermique, en particulier avec un débit volumique maximal, et qu'au moins une partie du processus de traitement thermique est réalisée à l'état évacué et qu'à une température prédéterminée pendant le refroidissement, la chambre de combustion (12) est de plus en plus alimentée en air ambiant ou, à un autre moment du processus de traitement, de l'air ambiant est aspiré en continu par la source de dépression (44) à travers la chambre de combustion (12), en particulier par l'intermédiaire d'un raccord d'entrée (22).
